# EUROPEAN PATENT APPLICATION

(11) **EP 1 610 534 A1**
(43) Date of publication of application: **28.12.2005**
(21) Application number: 05013735.5
(22) Date of filing: 24.06.2005
(51) Int. Cl.: H04M 1/27, H04M 1/725

(54) **Method for initiating voice recognition mode on mobile terminal**

(30) Priority: 25.06.2004 KR 2004048193
(71) Applicant: SAMSUNG ELECTRONICS CO., LTD., Suwon-si, Gyeonggi-do (KR)
(72) Inventor: Seo, Jeong-Wook, Yeongtong-gu Suwon-si Gyeonggi-do (KR); Chung, Seung-Nyung, Yeongtong-gu Suwon-si Gyeonggi-do (KR); Yoo, Myung-Hyun, Yeongtong-gu Suwon-si Gyeonggi-do (KR); Park, Joon-Ah, Yeongtong-gu Suwon-si Gyeonggi-do (KR); Kim, Kee-Eung, Yeongtong-gu Suwon-si Gyeonggi-do (KR); Chung, Ji-Hye, Yeongtong-gu Suwon-si Gyeonggi-do (KR)
(74) Representative: Lang, Johannes

(57) **Abstract**

A method for initiating a mode for performing a function via voice recognition in a mobile terminal is provided. The method comprises the steps of when a first key provided on the mobile terminal is pressed for or greater than a predetermined period of time, shifting to a voice dialing mode for placing a call through voice recognition; when a second key provided on the mobile terminal is pressed for or greater than a predetermined period of time, shifting to a voice menu search mode for searching for a menu through voice recognition; and when a third key provided on the mobile terminal is pressed for or greater than a predetermined period of time, shifting to a voice phonebook search mode for searching for a name and a corresponding telephone number in a phonebook through voice recognition.

## Description

### PRIORITY

This application claims the benefit under 35 U.S.C. 119(a) of an application entitled "Method for Initiating Voice Recognition Mode on Mobile Terminal" filed with the Korean Intellectual Property Office on June 25, 2004 and assigned Serial No. 2004-48193, the entire contents of which are incorporated herein by reference.

### BACKGROUND OF THE INVENTION

### Field of the Invention

The present invention relates to a method for initiating a voice recognition mode in a mobile terminal. More particularly, the present invention relates to a method for initiating a mode for performing a function through voice recognition according to a key input on a mobile terminal.

### Description of the Related Art

Voice recognition is a technology for recognizing or understanding human voice via computer analysis. Since the human voice has peculiar frequencies depending on the shape of the mouth and tongue position which change according to pronunciation, it can be recognized by converting speech into an electrical signal and extracting a frequency characteristic of a speech signal. Voice recognition technology is now used in a wide range of applications such as toys, language learning or consumer electronic devices and home appliances. Dialing on a mobile terminal by voice recognition can eliminate the need to directly input a telephone number by key-pressings and can thereby enhance user friendliness.

### SUMMARY OF THE INVENTION

Accordingly, the present invention has been made to solve the problems occurring in the prior art, and an object of the present invention is to provide a method for initiating a mode for performing a function through voice recognition according to a key input on a mobile terminal.

In accordance with a first aspect of the present invention for accomplishing the above object, there is provided a method for initiating a mode for performing a function via voice recognition in a mobile terminal, which comprises the steps of measuring the length of time during which a key provided on the mobile terminal is pressed; when the key is pressed for or greater than a predetermined period of time, shifting to a voice recognition mode; and when the key is pressed for a period less than the predetermined period, performing a function corresponding to the key.

In accordance with a second aspect of the present invention, there is provided a method for initiating a mode for performing a function via voice recognition in a mobile terminal, which comprises the steps of when a first key provided on the mobile terminal is pressed for or greater than a predetermined period of time, shifting to a voice dialing mode for placing a call through voice recognition; when a second key provided on the mobile terminal is pressed for or greater than a predetermined period of time, shifting to a voice menu search mode for searching for a menu through voice recognition; and when a third key provided on the mobile terminal is pressed for or greater than a predetermined period of time, shifting to a voice phonebook search mode for searching for a name and a corresponding telephone number in a phonebook through voice recognition.

In accordance with a third aspect of the present invention, there is provided a method for initiating a mode for performing a function via voice recognition on a mobile terminal, which comprises the steps of when a send key provided on the mobile terminal is pressed for or greater than a predetermined period of time, shifting to a voice name dialing mode or a voice telephone number dialing mode for placing a call through voice recognition; when the send key is pressed for a period less than the predetermined period, performing a function corresponding to the send key; when a menu key provided on the mobile terminal is pressed for or greater than a predetermined period of time, shifting to a voice menu search mode for searching for a menu through voice recognition; when the menu key is pressed for a period less than the predetermined period, performing a function corresponding to the menu key; when a phonebook key provided on the mobile terminal is pressed for or greater than a predetermined period of time, shifting to a voice phonebook search mode for searching for a name and a corresponding telephone number in a phonebook through voice recognition; and when the phonebook key is pressed for a period less than the predetermined period, performing a function corresponding to the phonebook key.

In accordance with a fourth aspect of the present invention, there is provided a method for initiating a mode for performing a function via voice recognition in a mobile terminal, which comprises the steps of when a first key provided on the mobile terminal is pressed in a voice recognition mode, shifting to a voice dialing mode for placing a call through voice recognition; when a second key provided on the mobile terminal is pressed in the voice recognition mode, shifting to a voice menu search mode for searching for a menu through voice recognition; and when a third key provided on the mobile terminal is pressed in the voice recognition mode, shifting to a voice phonebook search mode for searching for a name and a corresponding telephone number in a phonebook through voice recognition.

In accordance with a fifth aspect of the present invention, there is provided a method for initiating a mode for performing a function via voice recognition in a mobile terminal, which comprises the steps of when a send key provided on the mobile terminal is pressed in a voice recognition mode, shifting to a voice name dialing mode or a voice telephone number dialing mode for placing a call through voice recognition; when the send key is pressed in a mode other than the voice recognition mode, performing a function corresponding to the send key; when a menu key provided on the mobile terminal is pressed in the voice recognition mode, shifting to a voice menu search mode for searching for a menu through voice recognition; when the menu key is pressed in a mode other than the voice recognition mode, performing a function corresponding to the menu key; when a phonebook key provided on the mobile terminal is pressed in the voice recognition mode, shifting to a voice phonebook search mode for searching for a name and a corresponding telephone number in a phonebook through voice recognition; and when the phonebook key is pressed in a mode other than the voice recognition mode, performing a function corresponding to the phonebook key.

In accordance with a sixth aspect of the present invention, there is provided a method for initiating a mode for performing a function via voice recognition in a mobile terminal, which comprises the steps of when a voice recognition key is selected, activating a voice recognition key mode; when a first key provided on the mobile terminal is pressed in the voice recognition key mode, shifting to a voice dialing mode for placing a call through voice recognition; when a second key provided on the mobile terminal is pressed in the voice recognition key mode, shifting to a voice menu search mode for searching for a menu through voice recognition; and when a third key provided on the mobile terminal is pressed in the voice recognition key mode, shifting to a voice phonebook search mode for searching for a name and a corresponding telephone number in a phonebook through voice recognition.

In accordance with a seventh aspect of the present invention, there is provided a method for initiating a mode for performing a function via voice recognition in a mobile terminal, which comprises the steps of when a send key provided on the mobile terminal is pressed, performing a function corresponding to the send key; when the send key is pressed after a change of mode to a voice recognition key mode, shifting to a voice name dialing mode or a voice telephone number dialing mode for placing a call through voice recognition; when a menu key provided on the mobile terminal is pressed, performing a function corresponding to the menu key; when the menu key is pressed after a change of mode to the voice recognition key mode, shifting to a voice menu search mode for searching for a menu through voice recognition; when a phonebook key provided on the mobile terminal is pressed, performing a function corresponding to the phonebook key; and when the phonebook key is pressed after a change of mode to the voice recognition key mode, shifting to a voice phonebook search mode for searching for a name and a corresponding telephone number in a phonebook through voice recognition.

In accordance with an eighth aspect of the present invention, there is provided a method for initiating a mode for performing a function via voice recognition in a mobile terminal, which comprises the steps of when a first key provided on the mobile terminal is pressed in a call mode, shifting to a voice dialing mode for placing a conference call or a parallel call through voice recognition; when a second key provided on the mobile terminal is pressed in the call mode, shifting to a voice menu search mode for searching for a menu through voice recognition; and when a third key provided on the mobile terminal is pressed in the call mode, shifting to a voice phonebook search mode for searching for a name and a corresponding telephone number in a phonebook through voice recognition.

In accordance with a ninth aspect of the present invention, there is provided a method for initiating a mode for performing a function via voice recognition in a mobile terminal, which comprises the steps of when a send key provided on the mobile terminal is pressed in a call mode, shifting to a voice name dialing mode or a voice telephone number dialing mode for placing a conference call or a parallel call through voice recognition; when the send key is pressed in a mode other than the call mode, performing a function corresponding to the send key; when a menu key provided on the mobile terminal is pressed in the call mode, shifting to a voice menu search mode for searching for a menu through voice recognition; when the menu key is pressed in a mode other than the call mode, performing a function corresponding to the menu key; when a phonebook key provided on the mobile terminal is pressed in the call mode, shifting to a voice phonebook search mode for searching for a name and a corresponding telephone number in a phonebook through voice recognition; and when the phonebook key is pressed in a mode other than the call mode, performing a function corresponding to the phonebook key.

### BRIEF DESCRIPTION OF THE DRAWINGS

The above and other objects, features and advantages of the present invention will be more apparent from the following detailed description taken in conjunction with the accompanying drawings, in which:
FIG. 1 is a block diagram illustrating a mobile terminal according to an embodiment of the present invention;
FIG. 2 is a flow chart illustrating a process of activating a voice recognition mode on a mobile terminal according to an embodiment of the present invention;
FIG. 3 is a flow chart illustrating a process of activating a voice recognition mode on a mobile terminal according to an embodiment of the present invention;
FIG. 4 is a flow chart illustrating a process of activating a voice recognition mode on a mobile terminal according to an embodiment of the present invention; and
FIG. 5 is a flow chart illustrating a process of activating a voice recognition mode on a mobile terminal according to an embodiment of the present invention.

Throughout the drawings, the same element is designated by the same reference numeral or character.

### DETAILED DESCRIPTION OF EXEMPLARY EMBODIMENTS

Hereinafter, embodiments of the present invention will be described with reference to the accompanying drawings. In the embodiments of the present invention, a detailed description of known functions and configurations incorporated herein will be omitted for conciseness.

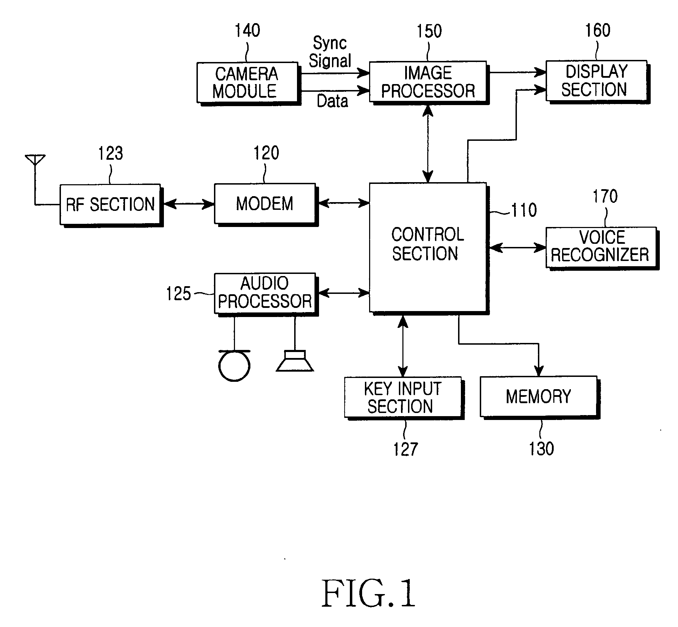

FIG. 1 is a block diagram illustrating a mobile terminal according to an embodiment of the present invention.

Referring to FIG. 1, a radio frequency (RF) section 123 performs a wireless communication function. The RF section 123 comprises a RF transmitter (not shown) for performing upward conversion and amplification of the frequency of a transmitted signal and an RF receiver (not shown) for amplifying a received signal with low noise and performing a downward conversion of the frequency of the signal.

A modem 120 comprises a transmitter (not shown) for coding and modulating a transmitted signal and a receiver (not shown) for demodulating and decoding a received signal. An audio processor 125 may comprise a codec having a data codec for processing packet data and an audio codec for processing an audio signal such as a speech signal. The audio processor 125 converts a digital audio signal output from the modem 120 into an analog signal through the audio codec and reproduces the analog signal. Also, the audio processor 125 converts an analog audio signal generated from a microphone into a digital audio signal and transmits the digital audio signal to the modem 120. The codec can be provided as an independent element or integrated in a control section 110.

A memory 130 may comprise a program memory and a data memory. The program memory includes programs for controlling general operations of the mobile terminal and those for performing a function corresponding to a key input through voice recognition according to an embodiment of the present invention. The data memory temporarily stores data generated during implementation of the above programs.

The control section 110 controls the overall operations of the mobile terminal. The control section 110 may include the modem 120 and the codec. In the embodiments of the present invention, the control section 110 controls implementation of a function or shift into a mode for voice recognition according to the length of time during which a specific key is pressed. When a specific function key is pressed, the control section 110 controls implementation of a corresponding function or shift into a mode for performing the function through voice recognition according to the current mode of the mobile terminal. If a voice recognition key has been pressed before any other key input, the control section 110 activates a mode for performing a function corresponding to the other key through voice recognition.

A camera module 140 is used to take pictures of an object on which its lens focuses. The camera module 140 comprises a camera sensor for converting a photographed optical signal into an electrical signal and a signal processor for converting an analog image signal photographed by the camera sensor into digital data. Assuming that the camera sensor is a charge coupled device sensor, the signal processor can be a digital signal processor (DSP). The camera sensor and the signal processor can be either integrated into a single element or separated as independent elements.

An image processor 150 generates picture data for displaying an image signal output from the camera module 140. The image processor 150 processes image signals output from the camera module 140 in frames. Also, the image processing section 150 adjusts the frame image data to conform to the size and other features of a display section 160 and outputs the adjusted frame image data. The image processor 150 comprising an image codec compresses the frame image data displayed on the display section 160 in a preset manner or restores the compressed frame image data to the original frame image data. The image codec is selected from a variety of still or moving picture codecs, such as Joint Picture Experts Group (JPEG) codec, Moving Picture Experts Group 4 (MPEG4) codec or Wavelet codec. Supposing that the image processor 150 has an on screen display (OSD) function, it can output OSD data according to the displayed picture size under the control of the control section 110.

The display section 160 displays image data output from the image processor 150 or user data output from the control section 110. When using a Liquid Crystal Display (LCD), the display section 160 may comprise a LCD controller, a memory for storing image data and a LCD device. When the LCD is a touch screen, it can serve as an input section. The display section 160 can display a voice dialing section comprising first to third input sections in a voice dialing mode according to an embodiment of the present invention.

A key input section 127 is provided with keys for inputting numbers and characters and function keys for setting up various functions. The key input section 127 may also include keys for performing predetermined functions or initiating modes for voice recognition according to an embodiment of the present invention. The key input section 127 may include first to third keys for performing predetermined functions or initiating modes for voice recognition according to an embodiment of the present invention. The first key can be used to perform a predetermined function or to enter a voice name dialing mode or a voice telephone number dialing mode. The second key can be used to perform a predetermined function or to enter a voice menu search mode. The third key can be used to perform a predetermined function or to enter a voice phonebook search mode.

A voice recognizer 170 detects the start and end points of a sound made by the user and input through a microphone. Upon extracting characteristic data in a speech section excluding mutes preceding and following the speech, the voice recognizer 170 performs vector quantization on the data in realtime. The voice recognizer 170 detects a word most similar to the characteristic data from the words recorded in a database. The voice recognizer 170 converts the detected word into a character signal which is then displayed on the voice dialing section of the display section 160.

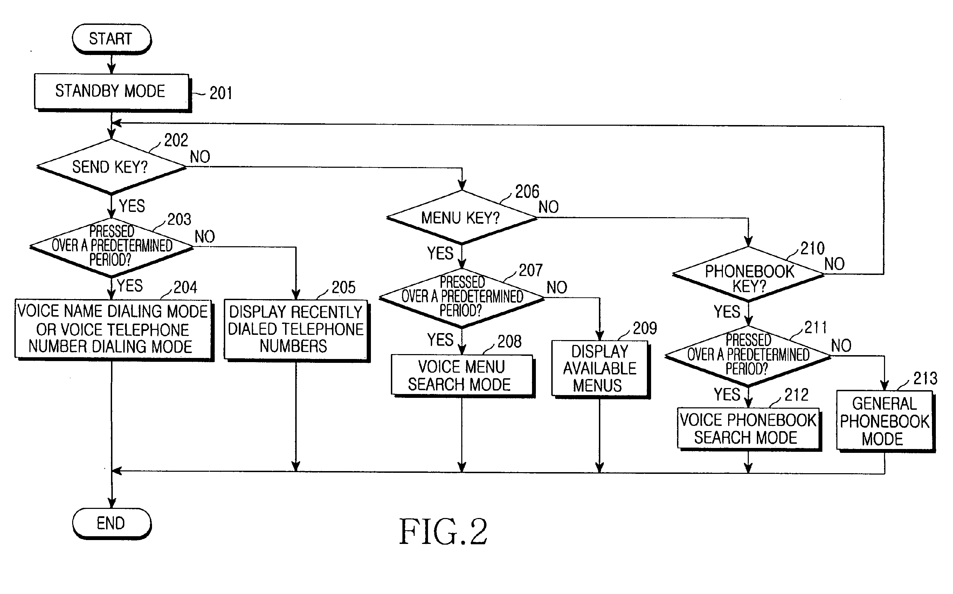

The process of activating a mode for performing a function through voice recognition on a mobile terminal having the above structure will be explained in detail with reference to FIGs. 2 to 5.

FIG. 2 is a flow chart illustrating a process of activating a mode for performing a function through voice recognition on a mobile terminal according to an embodiment of the present invention. In a first embodiment, it is assumed that the first, second and third keys provided on the key input section 127 comprise a send key, a menu key and a phonebook key, respectively.

The process according to the first embodiment will be explained in more detail with reference to FIG. 1.

When a user presses the send key in a standby mode of step 201, the control section 110 detects the key input at step 202 and measures the length of time during which the send key is pressed. When the control section 110 detects that the send key is pressed for or greater than a predetermined period of time at step 203, it proceeds with step 204 to enter a voice dialing mode for placing a call through voice recognition. At step 204, the control section 110 also determines the type of voice dialing mode. If a voice name dialing mode has been set to be activated when the send key is pressed for or greater than the predetermined period of time, the control section 110 will activate the voice name dialing mode in which the user can say a recipient's name to initiate an outgoing call to a stored telephone number of the recipient through voice recognition. If a voice telephone number dialing mode has been set to be activated when the send key is pressed for or greater than the predetermined period of time, the control section 110 will activate the voice telephone number dialing mode in which the user can say a telephone number of a recipient to initiate an outgoing call to that telephone number through voice recognition. When the control section 110 detects that the send key is pressed for a period less than the predetermined period of time at step 203, it proceeds with step 205 to control the display section 160 to display a list of recently dialed telephone numbers. When the user selects one of the telephone numbers displayed on the display section 160, the control section 110 performs a function of initiating an outgoing call to the selected telephone number.

When the user presses the menu key in the standby mode of step 201, the control section 110 detects the key input at step 206 and measures the length of time during which the menu key is pressed. When the control section 110 detects that the menu key is pressed for or greater than a predetermined period of time at step 207, it proceeds with step 208 to enter a voice menu search mode for searching for a menu through voice recognition. When the control section 110 detects that the menu key is pressed for a period less than the predetermined period of time at step 207, it proceeds with step 209 to control the display section 160 to display all available menus of the mobile terminal.

When the user presses the phonebook key in the standby mode of step 201, the control section 110 detects the key input at step 210 and measures the length of time during which the phonebook key is pressed. When the control section 110 detects that the phonebook key is pressed for or greater than a predetermined period of time at step 211, it proceeds with step 212 to activate a voice phonebook search mode for searching for a name and a corresponding telephone number through voice recognition. When the control section 110 detects that the menu key is pressed for a period less than the predetermined period of time at step 211, it proceeds with step 213 to activate a general phonebook search in which the user can search for a name or a telephone number in a phonebook stored in the mobile terminal.

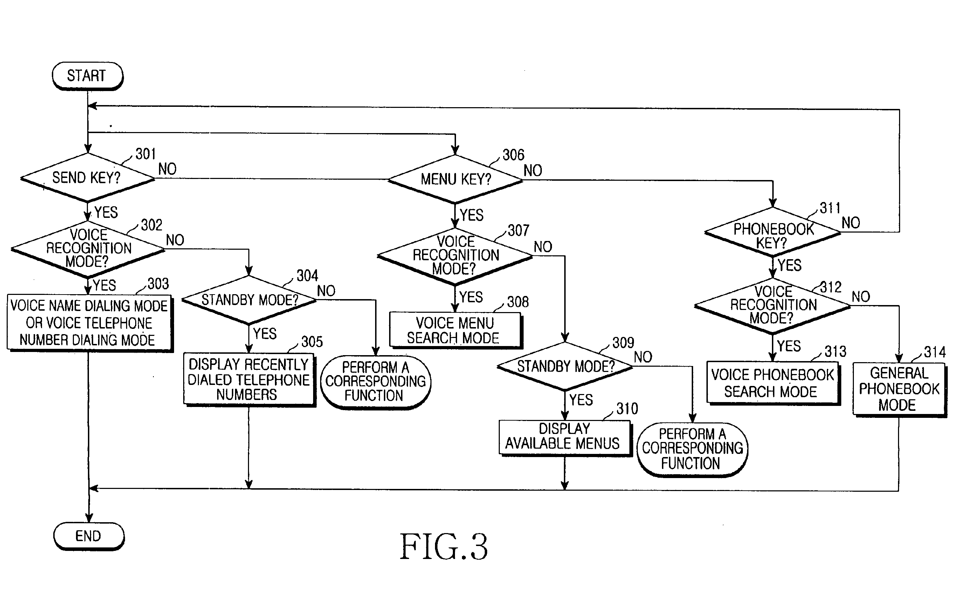

FIG. 3 is a flow chart illustrating a process of activating a mode for performing a function through voice recognition on a mobile terminal according to an embodiment of the present invention. In a second embodiment, it is supposed that the first, second and third keys provided on the key input section 127 comprise a send key, a menu key and a phonebook key, respectively.

The process according to the second embodiment will be explained in more detail with reference to FIG. 1.

When the user presses the send key, the control section 110 detects the key input at step 301 and determines the current mode of the mobile terminal. When the mobile terminal is currently in a voice recognition mode, the control section 110 detects the mode at step 302 and proceeds with step 303 to enter a voice dialing mode for placing a call through voice recognition. At step 303, the control section 110 also determines the type of voice dialing mode. If a voice name dialing mode has been set to be activated when the send key is pressed in the voice recognition mode, the control section 110 will activate the voice name dialing mode in which the user can say a recipient's name to initiate an outgoing call to a stored telephone number of the recipient through voice recognition. If a voice telephone number dialing mode has been set to be activated when the send key is pressed for or greater than the predetermined period of time, the control section 110 will activate the voice telephone number dialing mode in which the user can say a telephone number of a recipient to initiate an outgoing call to the telephone number through voice recognition. When the mobile terminal is currently in the standby mode, the control section 110 detects the mode at step 304 and proceeds with step 305 to control the display section 160 to display a list of recently dialed telephone numbers. When the user selects one of the telephone numbers displayed on the display section 160, the control section 110 performs a function to initiate an outgoing call based on the selected telephone number.

When the user presses the menu key, the control section 110 detects the key input at step 306 and determines the current mode of the mobile terminal. When the mobile terminal is currently in the voice recognition mode, the control section detects the mode at step 307 and proceeds with step 308 to enter a voice menu search mode for searching for a menu through voice recognition. When the mobile terminal is currently in the standby mode, the control section 110 detects the mode at step 309 and proceeds with step 310 to control the display section 160 to display all available menus of the mobile terminal.

When the user presses the phonebook key, the control section 110 detects the key input at step 311 and determines the current mode of the mobile terminal. When the mobile terminal is currently in the voice recognition mode, the control section detects the mode at step 312 and proceeds with step 313 to activate a voice phonebook search mode for searching for a name and a corresponding telephone number through voice recognition. When the mobile terminal is currently in the standby mode, the control section 110 detects the mode at step 312 and proceeds with step 314 to activate a general phonebook search in which the user can search for a name or a telephone number in a phonebook stored in the mobile terminal.

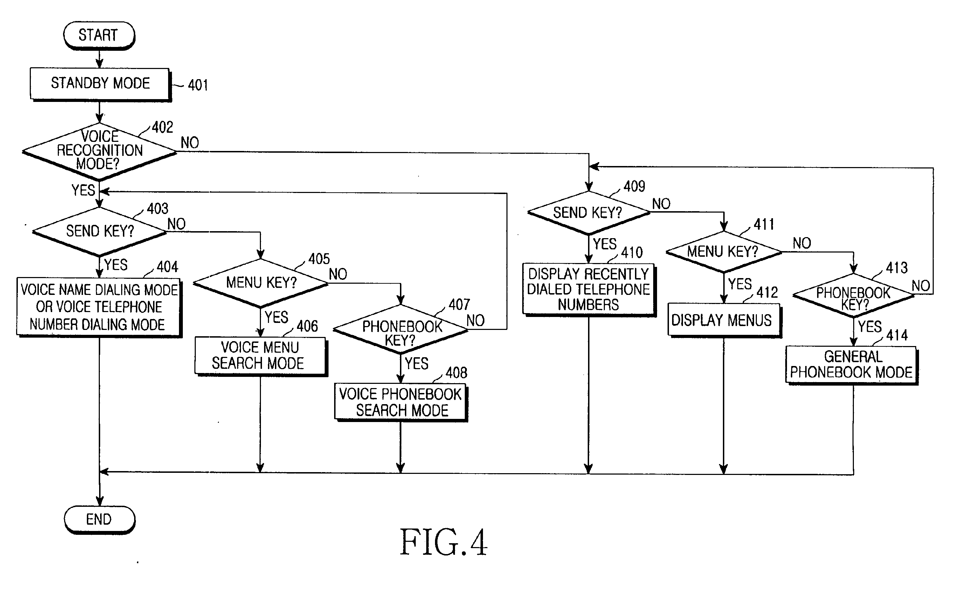

FIG. 4 is a flow chart illustrating a process of activating a mode for performing a function through voice recognition on a mobile terminal according to a third embodiment of the present invention. In the third embodiment, it is supposed that the first, second and third keys provided on the key input section 127 comprise a send key, a menu key and a phonebook key, respectively.

The process according to the third embodiment will be explained in more detail with reference to FIG. 1.

When the user presses a voice recognition key in the standby mode of step 401, the control section 110 detects the key input at step 402 and controls a subsequently pressed key to activate a mode for performing a function through voice recognition. A key capable of performing a predetermined function and activating a mode for voice recognition can only activate the mode for voice recognition, if pressed subsequent to the voice recognition key. When the user presses the send key following the voice recognition key, the control section 110 detects the key input at step 403 and proceeds with step 404 to enter a voice dialing mode for placing a call through voice recognition. At step 404, the control section 110 also determines the type of voice dialing mode. If a voice name dialing mode has been set to be activated when the send key is pressed in the voice recognition mode, the control section 110 will activate the voice name dialing mode in which the user can say a recipient's name to initiate an outgoing call to a stored telephone number of the recipient through voice recognition. If a voice telephone number dialing mode has been set to be activated when the send key is pressed for or greater than the predetermined period of time, the control section 110 will activate the voice telephone number dialing mode in which the user can say a telephone number of a recipient to initiate an outgoing call to the telephone number through voice recognition.

When the user presses the menu key following the voice recognition key, the control section 110 detects the key input at step 405 and proceeds with step 406 to enter a voice menu search mode for searching for a menu through voice recognition.

When the user presses the phonebook key following the voice recognition key, the control section 110 detects the key input at step 407 and proceeds with step 408 to activate a voice phonebook search mode for searching for a name and a corresponding telephone number through voice recognition.

On the other hand, when the user presses the send key in the standby mode of step 401, the control section 110 detects the key input at step 409 and proceeds with step 410 to control the display section 160 to display a list of recently dialed telephone numbers. When the user selects one of the telephone numbers displayed on the display section 160, the control section 110 performs a function of initiating an outgoing call to the selected telephone number. When the user presses the menu key in the standby mode of step 401, the control section 110 detects the key input at step 411 and proceeds with step 412 to control the display section 160 to display all available menus of the mobile terminal. When the user presses the phonebook key in the standby mode of step 401, the control section 110 detects the key input at step 413 and proceeds with step 414 to activate a general phonebook search in which the user can search for a name or a telephone number in a phonebook stored in the mobile terminal.

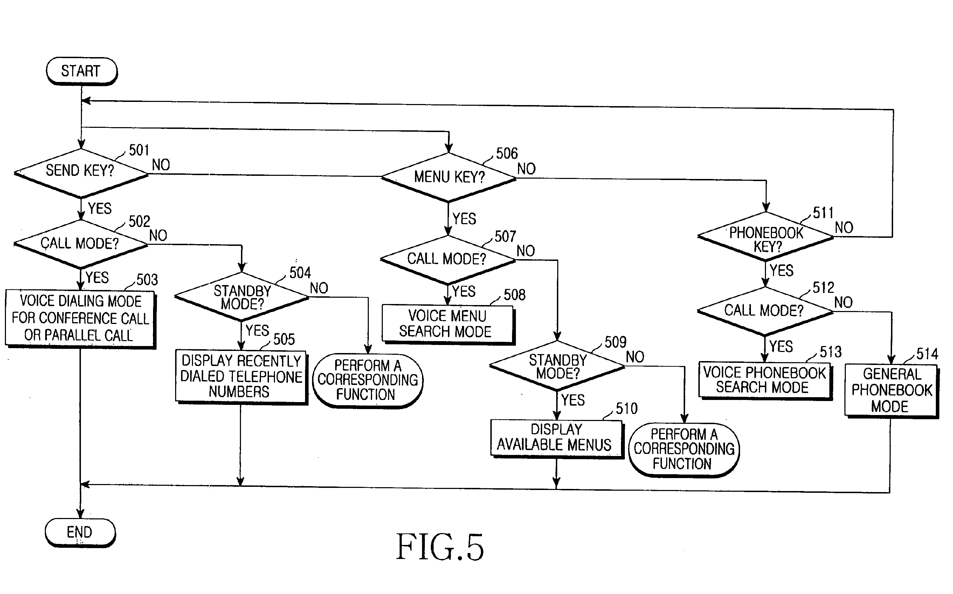

FIG. 5 is a flow chart illustrating a process of activating a mode for performing a function through voice recognition on a mobile terminal according to an embodiment of the present invention. In a fourth embodiment, it is assumed that the first, second and third keys provided on the key input section 127 comprise a send key, a menu key and a phonebook key, respectively.

The process according to the fourth embodiment will be explained in more detail with reference to FIG. 1.

When the user presses the send key, the control section 110 detects the key input at step 501 and determines the current mode of the mobile terminal. When the mobile terminal is currently in a call mode, the control section 110 detects the mode at step 502 and proceeds with step 503 to enter a voice dialing mode for placing a conference call or a parallel call through voice recognition. When the mobile terminal is in the standby mode, the control section 110 detects the mode at step 504 and proceeds with step 505 to control the display section 160 to display a list of recently dialed telephone numbers. When the user selects one of the telephone numbers displayed on the display section 160, the control section 110 performs a function of initiating an outgoing call to the selected telephone number.

When the user presses the menu key, the control section 110 detects the key input at step 506 and determines the current mode of the mobile terminal. When the mobile terminal is currently in the call mode, the control section detects the mode at step 507 and proceeds with step 508 to enter a voice menu search mode for searching for a menu through voice recognition. When the mobile terminal is currently in the standby mode, the control section 110 detects the mode at step 509 and proceeds with step 510 to control the display section 160 to display all available menus of the mobile terminal.

When the user presses the phonebook key, the control section 110 detects the key input at step 511 and determines the current mode of the mobile terminal. When the mobile terminal is currently in the call mode, the control section detects the mode at step 512 and proceeds with step 513 to activate a voice phonebook search mode for searching for a name and a corresponding telephone number through voice recognition. When the mobile terminal is currently in the standby mode, the control section 110 detects the mode at step 512 and proceeds with step 514 to activate a general phonebook search in which the user can search for a name or a telephone number in the phonebook stored in the mobile terminal.

The send key, menu key and phonebook key have been explained as examples of function keys that can perform predetermined functions and activate modes for voice recognition. However, the function keys and modes for voice recognition are not limited to those explained above. Users can selectively use other keys provided on the mobile terminal to activate corresponding modes for voice recognition.

According to the present invention, a function key can be used to perform a predetermined function or activate a mode for performing the function through voice recognition according to the length of time during which the key is pressed, the current mode of the mobile terminal or the preceding key input

Although certain embodiments of the present invention have been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A method for initiating a mode for performing a function via voice recognition in a mobile terminal, which comprises the steps of:
measuring the length of time during which a key provided on the mobile terminal is pressed;
when the key is pressed for or greater than a predetermined period of time, shifting to a voice recognition mode; and
when the key is pressed for a period less than the predetermined period, performing a function corresponding to the key.

2. The method of claim 1, wherein the step of measuring further comprises:
providing a phone directory via voice recognition; and
selecting a number to dial via voice recognition.

3. The method of claim 1, wherein a manual function is performed if the key is pressed for a period less than the predetermined period.

4. A method for initiating a mode for performing a function via voice recognition in a mobile terminal, which comprises the steps of:
when a first key provided on the mobile terminal is pressed for or greater than a first predetermined period of time, shifting to a voice dialing mode for placing a call through voice recognition;
when a second key provided on the mobile terminal is pressed for or greater than a second predetermined period of time, shifting to a voice menu search mode for searching for a menu through voice recognition; and
when a third key provided on the mobile terminal is pressed for or greater than a third predetermined period of time, shifting to a voice phonebook search mode for searching for a name and a corresponding telephone number in a phonebook through voice recognition.

5. The method as claimed in claim 4, further comprising the steps of:
when the first key is pressed for a period less than the first predetermined period of time, performing a function corresponding to the first key;
when the second key is pressed for a period less than the second predetermined period of time, performing a function corresponding to the second key; and
when the third key is pressed for a period less than the third predetermined period of time, performing a function corresponding to the third key.

6. The method of claim 4, wherein the first predetermined period of time, the second predetermined period of time and the third predetermined period of time comprise substantially equal time periods.

7. The method of claim 4, wherein the first predetermined period of time, the second predetermined period of time and the third predetermined period of time comprise different time periods.

8. A method for initiating a mode for performing a function via voice recognition in a mobile terminal, which comprises the steps of:
when a send key provided on the mobile terminal is pressed for or greater than a predetermined period of time, shifting to a voice name dialing mode or a voice telephone number dialing mode for placing a call through voice recognition;
when the send key is pressed for a period less than the predetermined period, performing a function corresponding to the send key;
when a menu key provided on the mobile terminal is pressed for or greater than a predetermined period of time, shifting to a voice menu search mode for searching for a menu through voice recognition;
when the menu key is pressed for a period less than the predetermined period, performing a function corresponding to the menu key;
when a phonebook key provided on the mobile terminal is pressed for or greater than the predetermined period of time, shifting to a voice phonebook search mode for searching for a name and a corresponding telephone number in a phonebook through voice recognition; and
when the phonebook key is pressed for a period less than the predetermined period, performing a function corresponding to the phonebook key.

9. A method for initiating a mode for performing a function via voice recognition in a mobile terminal, which comprises the steps of:
when a first key provided on the mobile terminal is pressed in a voice recognition mode, shifting to a voice dialing mode for placing a call through voice recognition;
when a second key provided on the mobile terminal is pressed in the voice recognition mode, shifting to a voice menu search mode for searching for a menu through voice recognition; and
when a third key provided on the mobile terminal is pressed in the voice recognition mode, shifting to a voice phonebook search mode for searching for a name and a corresponding telephone number in a phonebook through voice recognition.

10. The method as claimed in claim 9, further comprising the steps of:
when the first key is pressed in a mode other than the voice recognition mode, performing a function corresponding to the first key;
when the second key is pressed in a mode other than the voice recognition mode, performing a function corresponding to the second key; and
when the third key is pressed in a mode other than the voice recognition mode, performing a function corresponding to the third key.

11. A method for initiating a mode for performing a function via voice recognition in a mobile terminal, which comprises the steps of:
when a send key provided on the mobile terminal is pressed in a voice recognition mode, shifting to a voice name dialing mode or a voice telephone number dialing mode for placing a call through voice recognition;
when the send key is pressed in a mode other than the voice recognition mode, performing a function corresponding to the send key;
when a menu key provided on the mobile terminal is pressed in the voice recognition mode, shifting to a voice menu search mode for searching for a menu through voice recognition;
when the menu key is pressed in a mode other than the voice recognition mode, performing a function corresponding to the menu key;
when a phonebook key provided on the mobile terminal is pressed in the voice recognition mode, shifting to a voice phonebook search mode for searching for a name and a corresponding telephone number in a phonebook through voice recognition; and
when the phonebook key is pressed in a mode other than the voice recognition mode, performing a function corresponding to the phonebook key.

12. A method for initiating a mode for performing a function via voice recognition in a mobile terminal, which comprises the steps of:
when a voice recognition key is selected, activating a voice recognition key mode;
when a first key provided on the mobile terminal is pressed in the voice recognition key mode, shifting to a voice dialing mode for placing a call through voice recognition;
when a second key provided on the mobile terminal is pressed in the voice recognition key mode, shifting to a voice menu search mode for searching for a menu through voice recognition; and
when a third key provided on the mobile terminal is pressed in the voice recognition key mode, shifting to a voice phonebook search mode for searching for a name and a corresponding telephone number in a phonebook through voice recognition.

13. The method as claimed in claim 12, further comprising the steps of:
when the first key is pressed in a general mode of the mobile terminal, performing a function corresponding to the first key;
when the second key is pressed in the general mode, performing a function corresponding to the second key; and
when the third key is pressed in the general mode, performing a function corresponding to the third key.

14. A method for initiating a mode for performing a function via voice recognition in a mobile terminal, which comprises the steps of:
when a send key provided on the mobile terminal is pressed, performing a function corresponding to the send key;
when the send key is pressed after a change of mode to a voice recognition key mode, shifting to a voice name dialing mode or a voice telephone number dialing mode for placing a call through voice recognition;
when a menu key provided on the mobile terminal is pressed, performing a function corresponding to the menu key;
when the menu key is pressed after a change of mode to the voice recognition key mode, shifting to a voice menu search mode for searching for a menu through voice recognition;
when a phonebook key provided on the mobile terminal is pressed, performing a function corresponding to the phonebook key; and
when the phonebook key is pressed after a change of mode to the voice recognition key mode, shifting to a voice phonebook search mode for searching for a name and a corresponding telephone number in a phonebook through voice recognition.

15. A method for initiating a mode for performing a function via voice recognition in a mobile terminal, which comprises the steps of:
when a first key provided on the mobile terminal is pressed in a call mode, shifting to a voice dialing mode for placing a conference call or a parallel call through voice recognition;
when a second key provided on the mobile terminal is pressed in the call mode, shifting to a voice menu search mode for searching for a menu through voice recognition; and
when a third key provided on the mobile terminal is pressed in the call mode, shifting to a voice phonebook search mode for searching for a name and a corresponding telephone number in a phonebook through voice recognition.

16. The method as claimed in claim 15, further comprising the steps of:
when the first key is pressed in a mode other than the call mode, performing a function corresponding to the first key;
when the second key is pressed in a mode other than the call mode, performing a function corresponding to the second key; and
when the third key is pressed in a mode other than the call mode, performing a function corresponding to the third key.

17. A method for initiating a mode for performing a function via voice recognition in a mobile terminal, which comprises the steps of:
when a send key provided on the mobile terminal is pressed in a call mode, shifting to a voice name dialing mode or a voice telephone number dialing mode for placing a conference call or a parallel call through voice recognition;
when the send key is pressed in a mode other than the call mode, performing a function corresponding to the send key;
when a menu key provided on the mobile terminal is pressed in the call mode, shifting to a voice menu search mode for searching for a menu through voice recognition;
when the menu key is pressed in a mode other than the call mode, performing a function corresponding to the menu key;
when a phonebook key provided on the mobile terminal is pressed in the call mode, shifting to a voice phonebook search mode for searching for a name and a corresponding telephone number in a phonebook through voice recognition; and
when the phonebook key is pressed in a mode other than the call mode, performing a function corresponding to the phonebook key.
